# EUROPEAN PATENT APPLICATION

(11) **EP 3 651 045 A1**
(43) Date of publication of application: **13.05.2020**
(21) Application number: 17919720.7
(22) Date of filing: 01.08.2017
(51) Int. Cl.: G06F 21/57, G06F 21/60, H04L 29/06

(54) **SECURITY DIAGNOSTIC DEVICE AND SECURITY DIAGNOSTIC METHOD**

(71) Applicant: Mitsubishi Electric Corporation, Chiyoda-ku Tokyo 100-8310 (JP)
(72) Inventor: TAMMACHI, Kohei, Tokyo 100-8310 (JP)
(74) Representative: Pfenning, Meinig & Partner mbB
(86) International application number: PCT/JP2017/027822
(87) International publication number: WO 2019/026172

(57) **Abstract**

A security diagnosis device includes: an extraction unit to extract, from among parameters included in an HTTP request transmitted to a transition destination URL by a first account of privileged authority, a fixed parameter which has a same value as a parameter included in an HTTP request transmitted to the transition destination URL by a second account of the privileged authority; a request generation unit, when the fixed parameter extracted by the extraction unit is included in a parameter in an HTTP request to the transition destination URL by an account of general authority, and when a value differs from a value of an account of the privileged authority, to output the HTTP request in which the value of the account of the privileged authority is set to the fixed parameter; a request transmission/reception unit to transmit the HTTP request to the transition destination URL by the account of the general authority, and receives an HTTP response; and a determination unit to determine vulnerability of the transition destination URL, based on the HTTP response. Thereby, it is possible to diagnose incompletion of authority management without perceiving the transition destination URL in advance.

## Description

### Technical Field

The present invention relates to a security diagnosis device for diagnosing incompletion of authority management.

### Background Art

Vulnerability of Web applications open on the Internet is found on a daily basis, and an attack by a vicious attacker is one of the threats to be cautious of. As a method for checking presence/absence of the vulnerability of the Web applications, there is an Web application diagnosis tool or a security diagnosis service. They diagnose presence/absence of already-known vulnerability by implementing quasi-attacks on the Web applications.

One aspect of the vulnerability of the Web application is incompletion of authority management. When there exist two accounts having different authority, the incompletion of the authority management is a case where a transitionable page or a valid function only by only one account is also transitionable or executable by the other account. Conventionally, a checker checks a difference among accounts regarding the transitionable page or the valid function by visual inspection, and the checker sets to a tool or manually implementing quasi-attacks, thereby the incompletion of the authority management is diagnosed. However, as personnel expenses cost, it is required to reduce the personnel expenses.

In Patent Literature 1, by tracing a call of an authority request API and a call of an actual access API at the time of accessing to an object, an estimated access API is created, and it is checked if the estimated access API is associated with the call of the actual access API. When the actual access API is not associated with the estimated access API, in Patent Literature 1, it is determined that minimal authority violation occurs.

### Citation List

### Patent Literature

Patent Literature 1: JP2010-176167A

### Summary of Invention

### Technical Problem

However, in Patent Literature 1, there is a problem that it is not able to determine if there is incompletion of authority management when allocation of the authority to an object is unknown.

The present invention is conceived for solving the above problem, and aims at acquiring a security diagnosis device which can diagnose if there is incompletion of the authority management without perceiving a transition destination URL of an Web application in advance.

### Solution to Problem

The present invention includes,
an extraction unit to extract, from among parameters included in an HTTP request transmitted to a transition destination URL by a first account of privileged authority, a fixed parameter which has a same value as a parameter included in an HTTP request transmitted to the transition destination URL by a second account of the privileged authority;
a request generation unit, when the fixed parameter extracted by the extraction unit is included in a parameter in an HTTP request to the transition destination URL by an account of general authority, and when a value differs from a value of an account of the privileged authority, to output the HTTP request in which the value of the account of the privileged authority is set to the fixed parameter;
a request transmission/reception unit to transmit the HTTP request to the transition destination URL by the account of the general authority, and receives an HTTP response; and
a determination unit to determine vulnerability of the transition destination URL, based on the HTTP response.

### Advantageous Effects of Invention

According to the present invention, it is possible to acquire a security diagnosis device which diagnoses if there is incompletion of authority management without perceiving a transition destination URL of an Web application in advance.

### Brief Description of Drawings

Fig.1 is a block diagram illustrating an example of a hardware configuration of a security diagnosis device according to Embodiment 1;
Fig.2 is a block diagram illustrating an example of a functional configuration of a diagnosis device according to Embodiment 1;
Fig.3 is a diagram illustrating an example of an account information table according to Embodiment 1;
Fig.4 is a diagram illustrating an example of a login parameter table according to Embodiment 1;
Fig.5 is a diagram illustrating an example of a target URL table according to Embodiment 1;
Fig.6 is a diagram illustrating an example of an HTTP request-response table according to Embodiment 1;
Fig.7 is a diagram illustrating an example of a parameter table according to Embodiment 1;
Fig.8 is a diagram illustrating an example of a fixed parameter table according to Embodiment 1;
Fig.9 is a diagram illustrating an example of a diagnosis result table according to Embodiment 1;
Fig.10 is a diagram illustrating an example of a result detail table according to Embodiment 1;

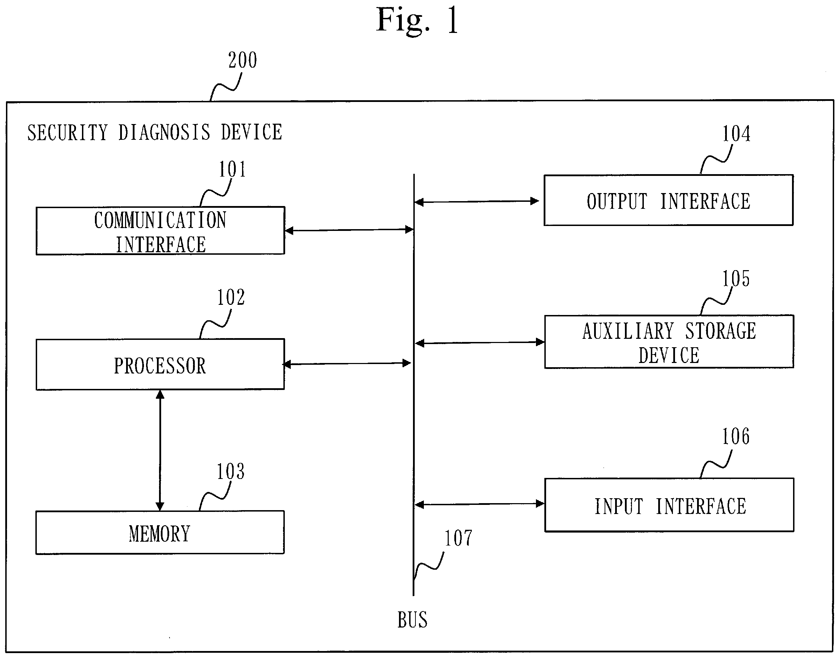

Fig.1 1 is a flowchart illustrating a flow of processes of an input unit, a crawling implementation unit and an extraction unit according to Embodiment 1;

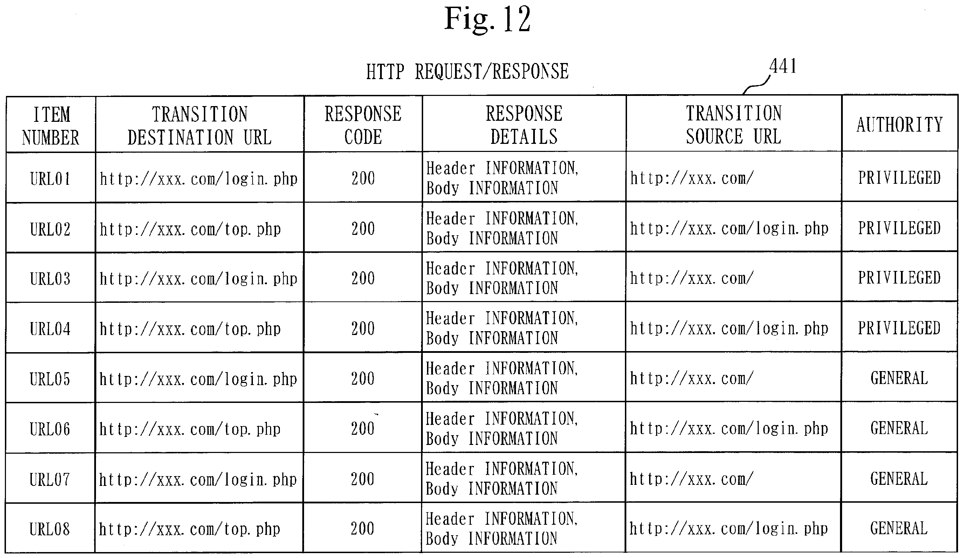

Fig.12 is a diagram illustrating an example of an HTTP request-response table 441 according to Embodiment 1;

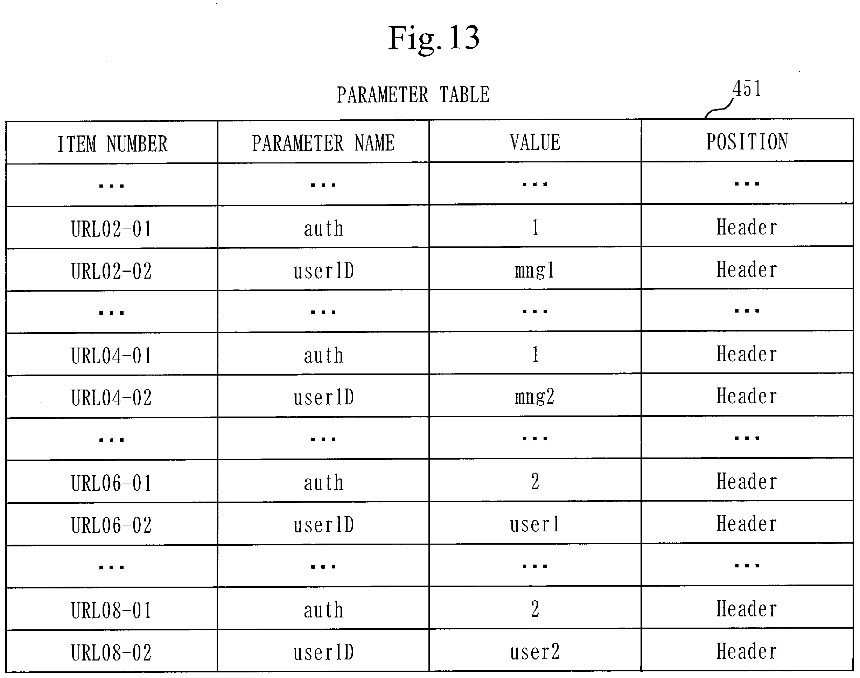

Fig.13 is a diagram illustrating a parameter table 451 according to Embodiment 1;

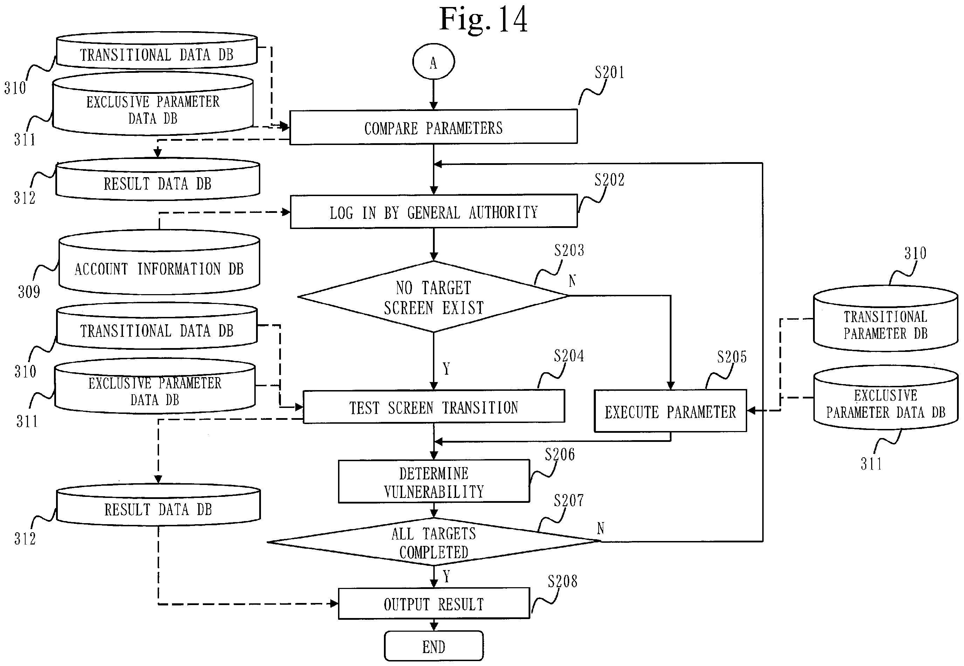

Fig.14 is a flowchart illustrating a flow of processes of a comparison unit, a request generation unit, a request transmission/reception unit, a determination unit and an output unit according to Embodiment 1;

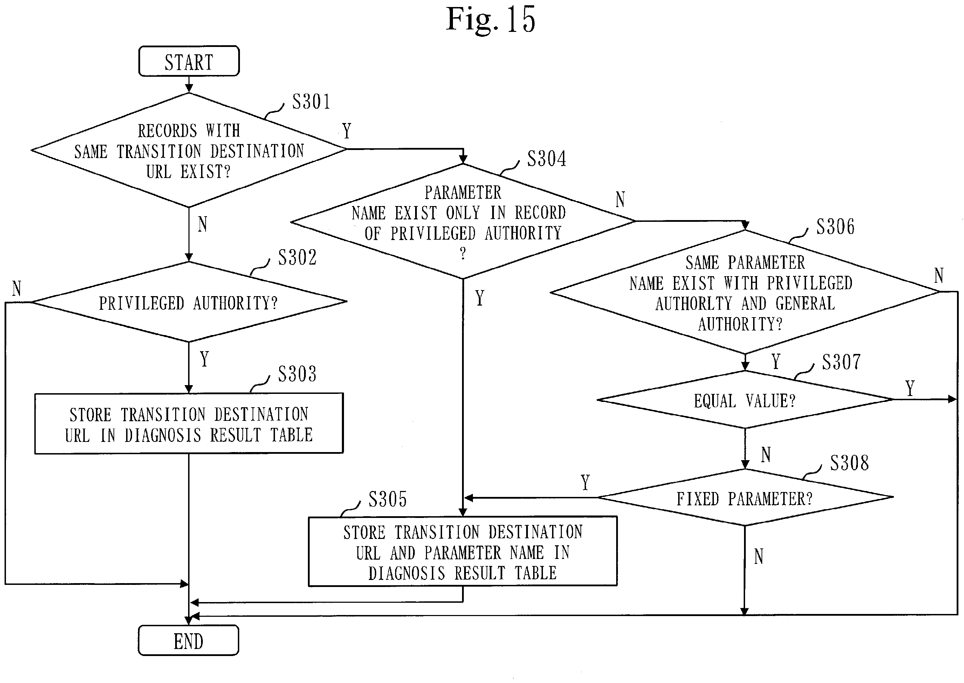

Fig.15 is a flowchart illustrating details of a process of the comparison unit in step S201 of Fig.14 according to Embodiment 1;

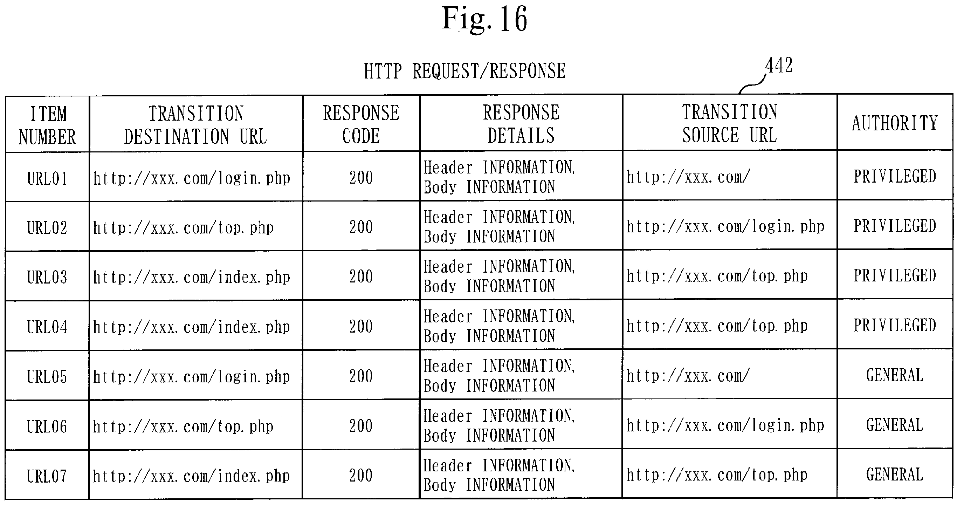

Fig.16 is a diagram illustrating an example of an HTTP request-response table according to Embodiment 2;

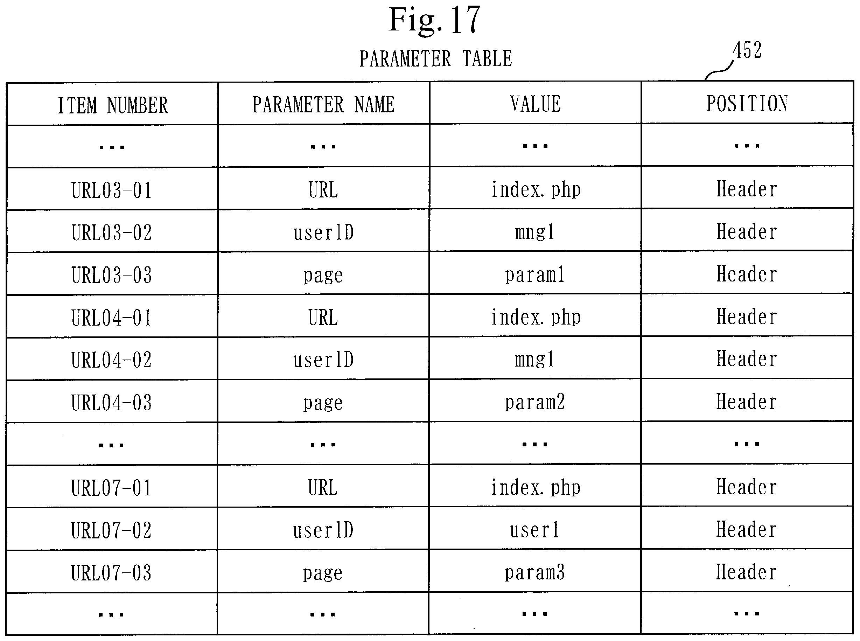

Fig.17 is a diagram illustrating an example of a parameter table according to Embodiment 2;

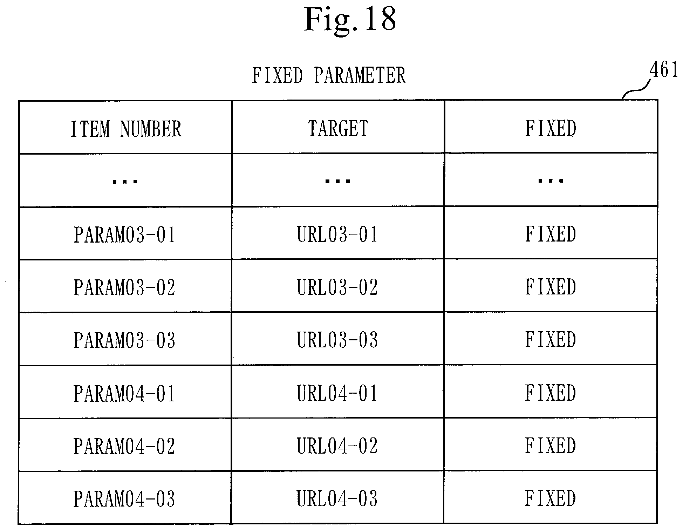

Fig.18 is a diagram illustrating an example of a fixed parameter table according to Embodiment 2;

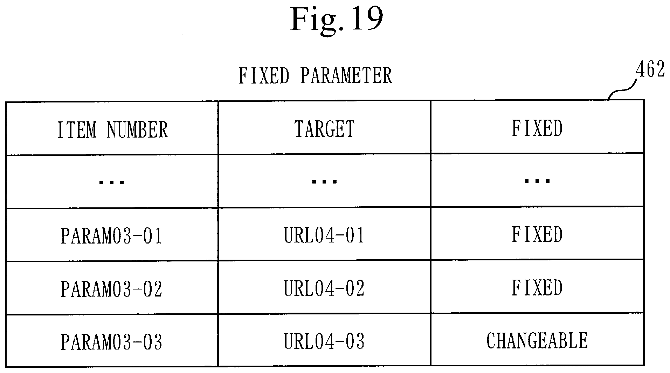

Fig.19 is a diagram illustrating an example of the fixed parameter table according to Embodiment 2;

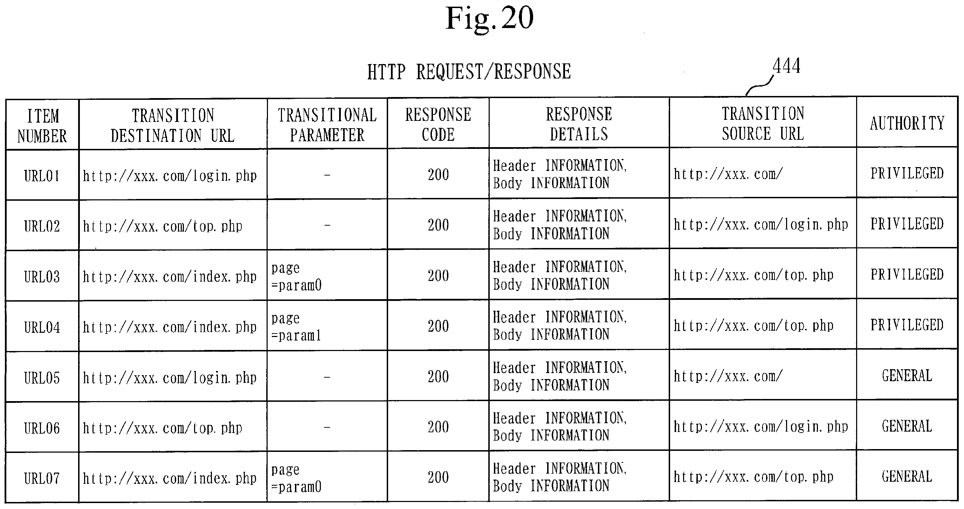

Fig.20 is a diagram illustrating an example of an HTTP request-response table according to Embodiment 2;

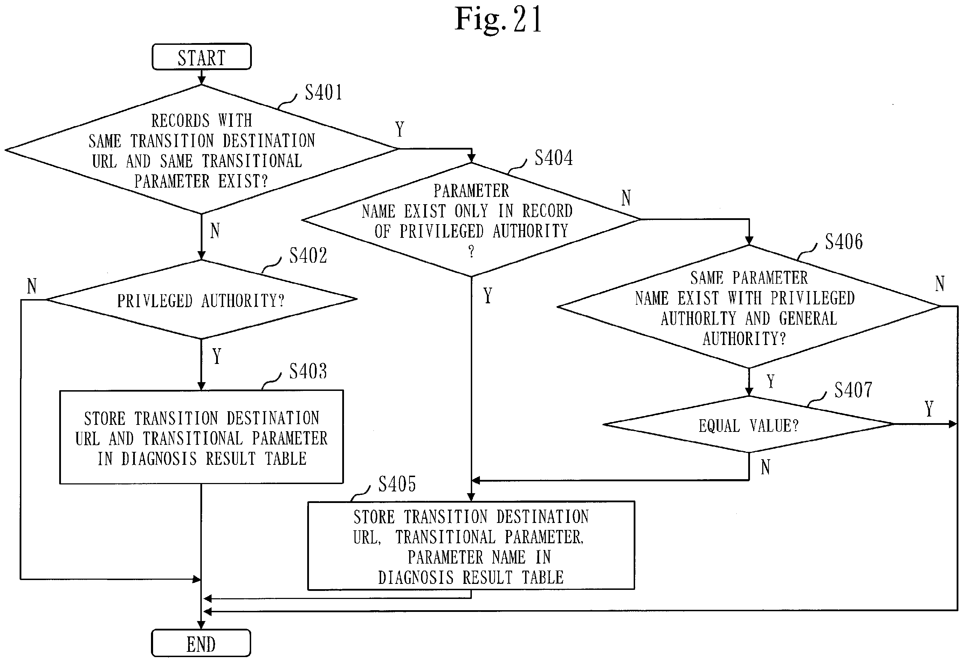

Fig.21 is a flowchart illustrating details of a process of a comparison unit in step S201 of Fig.14 according to Embodiment 2;

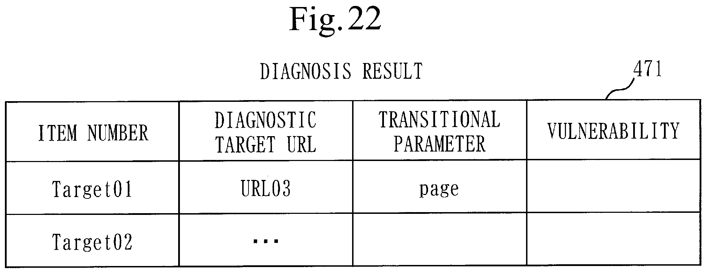

Fig.22 is a diagram illustrating an example of a diagnosis result table according to Embodiment 2;

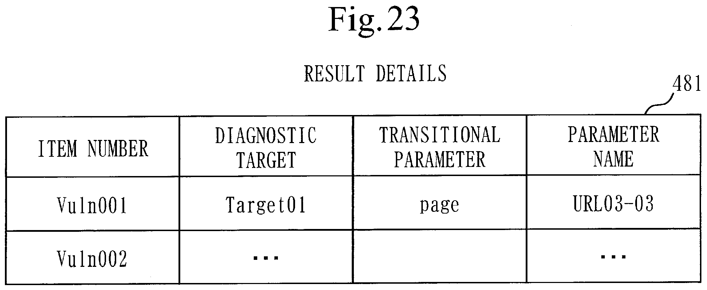

Fig.23 is a diagram illustrating an example of a result detail table according to Embodiment 2;

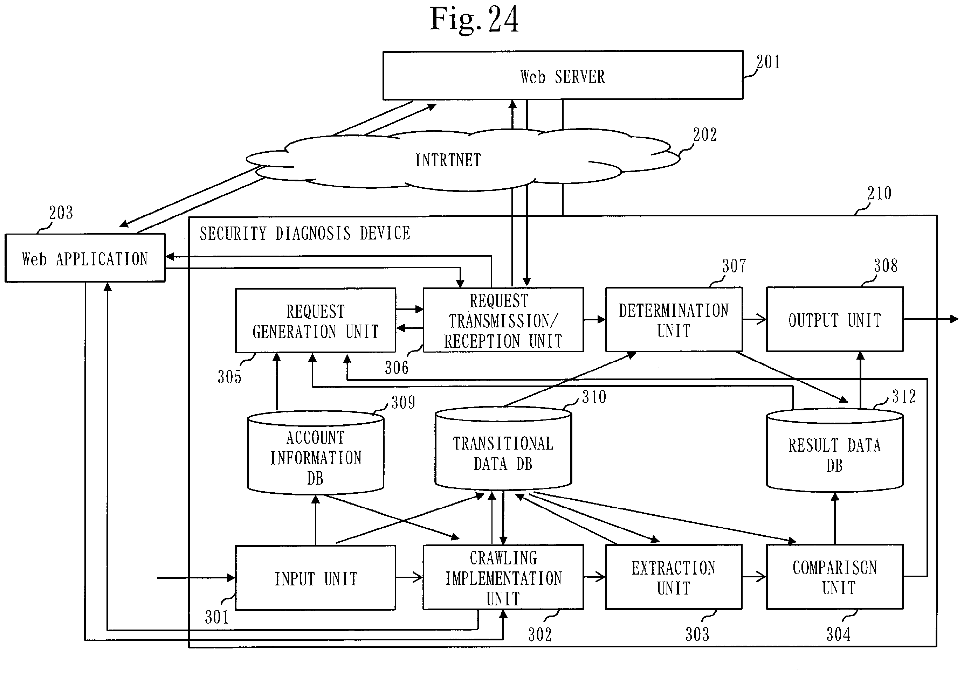

Fig.24 is an overall block diagram including an example of a functional configuration of a diagnosis device according to Embodiment 3;

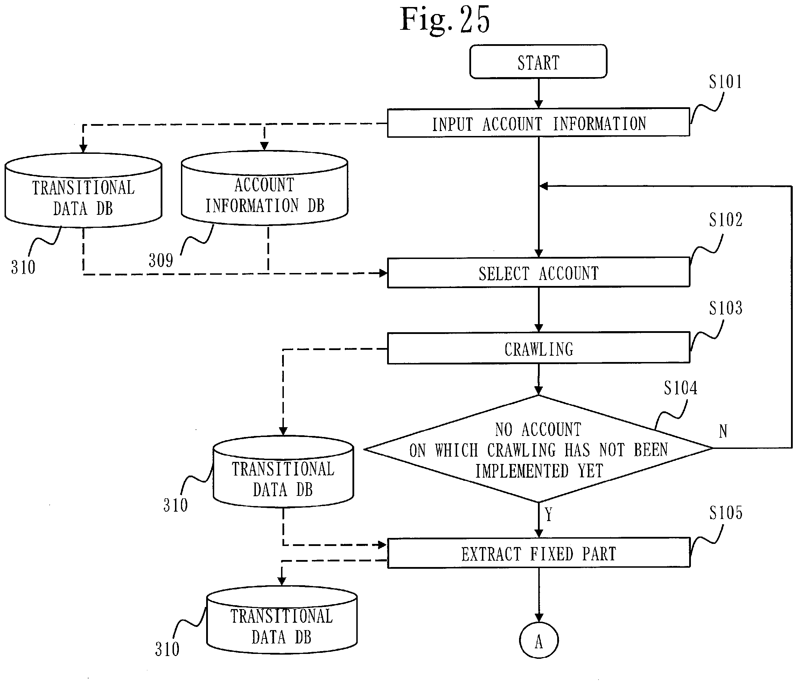

Fig.25 is a flowchart illustrating a flow of processes of an input unit, a crawling implementation unit and an extraction unit according to Embodiment 3;

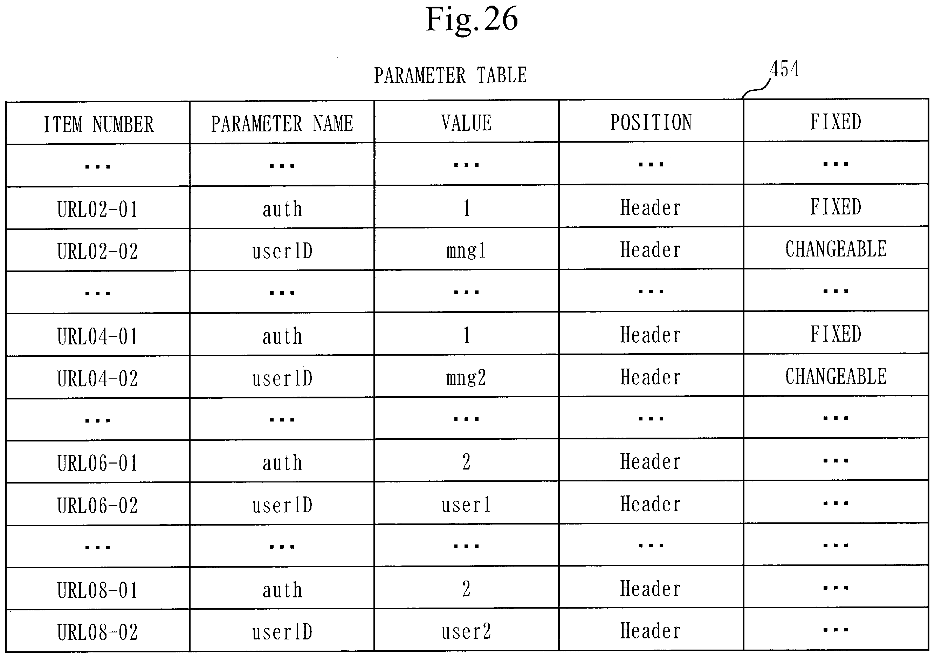

Fig.26 is a diagram illustrating an example of a parameter table of a transitional data DB according to Embodiment 3;

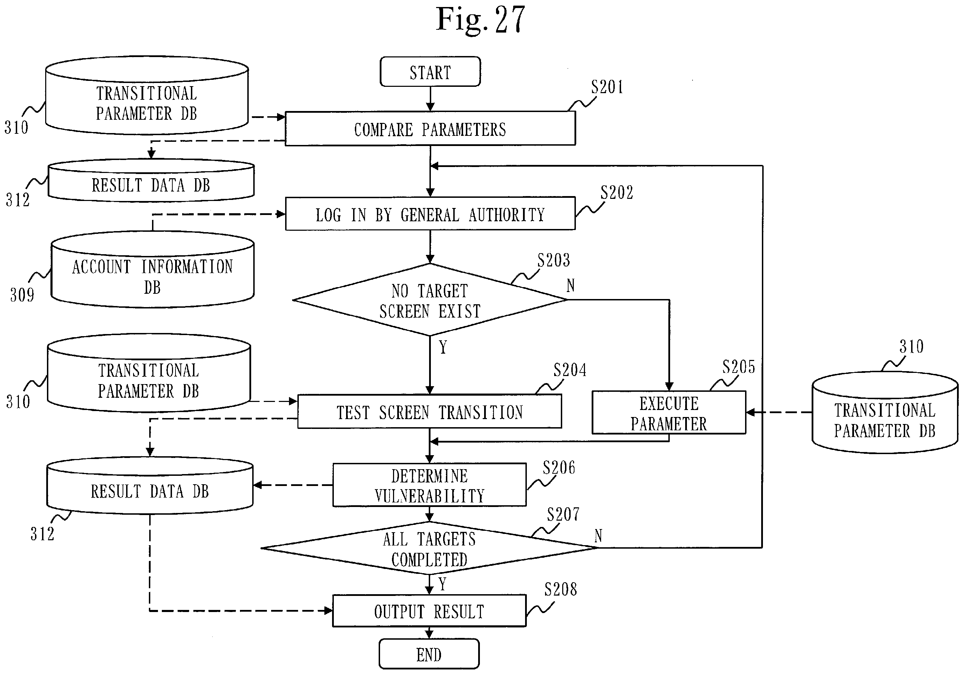

Fig.27 is a flowchart illustrating a flow of processes of a comparison unit, a request generation unit, a request transmission/reception unit, a determination unit and an output unit according to Embodiment 3;

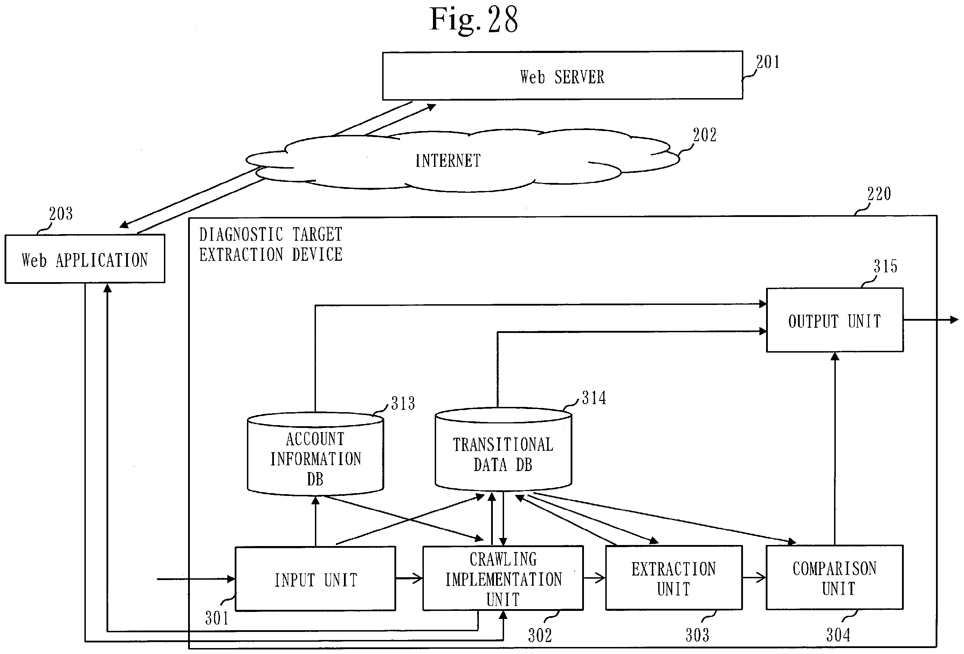

Fig.28 is an overall block diagram including an example of a functional configuration of a diagnostic target extraction device according to Embodiment 4;

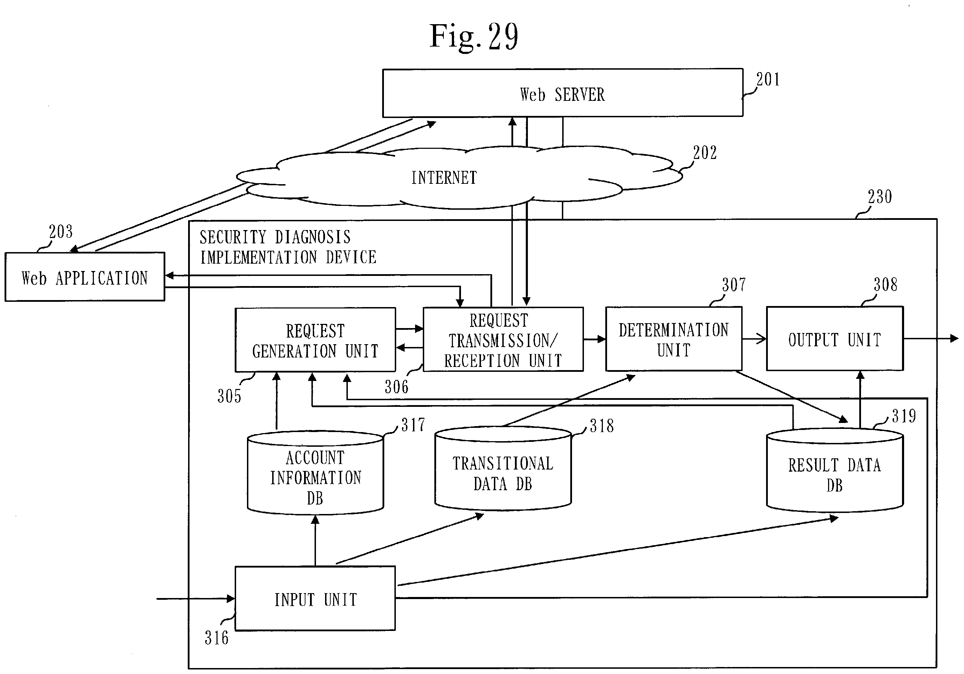

Fig.29 is an overall block diagram including a functional configuration of a diagnosis implementation device according to Embodiment 4;

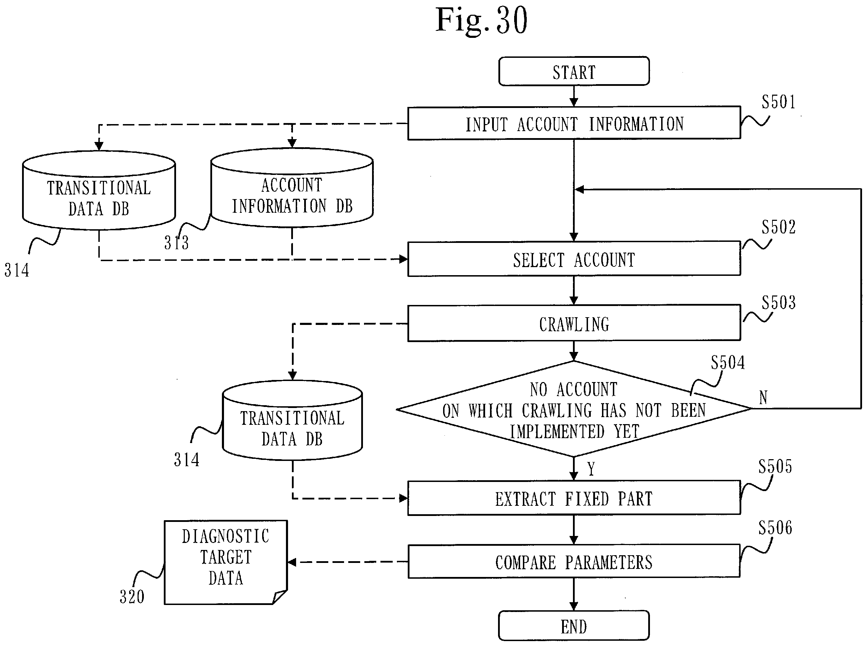

Fig.30 is a flowchart illustrating a flow of processes of an input unit, a crawling implementation unit and an extraction unit of the diagnostic target extraction device according to Embodiment 4;

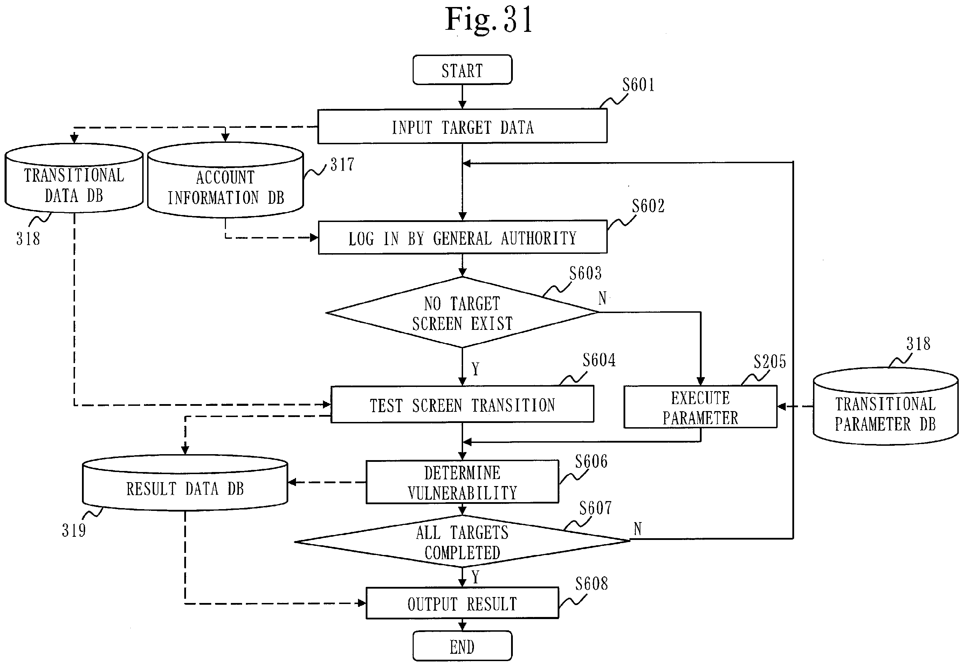

Fig.31 is a flowchart illustrating a flow of processes of an input unit, a request generation unit, a request transmission/reception unit, a determination unit and an output unit of the diagnosis implementation device according to Embodiment 4.

### Description of Embodiments

Embodiments of the present invention will be described hereinafter with reference to drawings. Note that, in the referential drawings, the same or corresponding parts are denoted by the same reference signs.

### Embodiment 1

First, a hardware configuration will be described.

Fig.1 is a block diagram illustrating an example of a hardware configuration of a security diagnosis device (called as a diagnosis device hereinafter) 200 according to Embodiment 1.

The diagnosis device includes a communication interface 101, a processor 102, a memory 103, an input interface 104, an auxiliary storage device 105 and an output interface 106, the communication interface 101 performing communication with an Web application which is a diagnostic target using the HTTP, the processor 102 performing a calculation process on an HTTP request and an HTTP response, the memory 103 storing a calculation result and so forth, the input interface 104 receiving input from a user, the auxiliary storage device 105 for storing data, the output interface 106 displaying a result on a screen.

The processor 102 is realized by a processing circuit such as a CPU which executes a program stored in a memory, a system LSI (Large Scale Integration) or so forth. The processor 102 may be configured by a plurality of processing circuits which cooperate. The memory 103 is, for example, configured by a ROM (Read Only Memory), a RAM (Random Access Memory) or an SSD (Solid State Drive). The auxiliary storage device 105 is, for example, configured by an HDD (Hard Disk Drive).

Next, a functional configuration will be described.

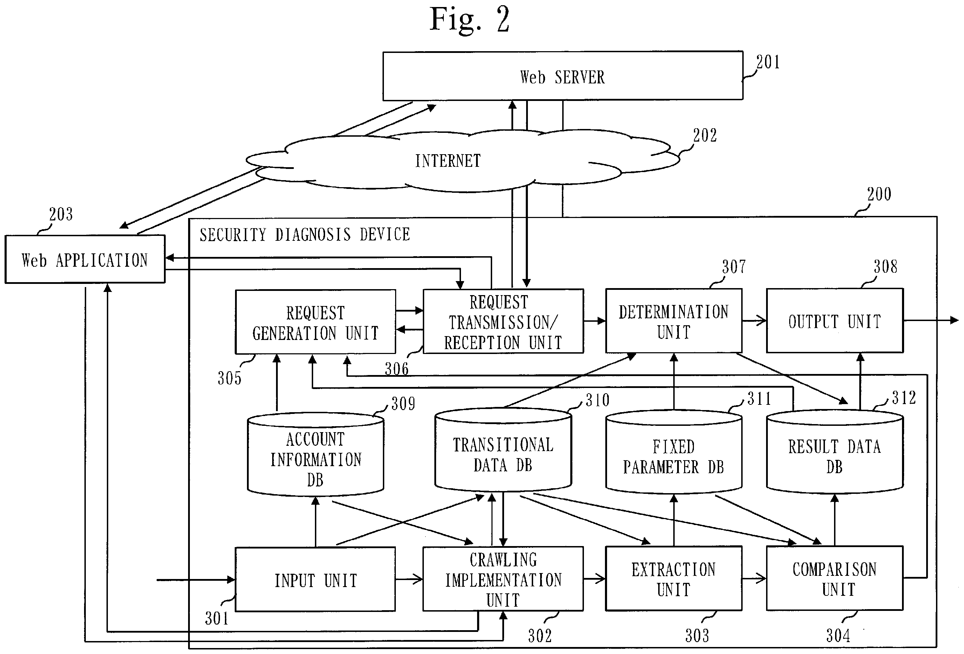

Fig.2 is an overall block diagram including an example of the diagnosis device 200 according to Embodiment 1.

Web application 203 transmits an HTTP request via Internet 202 to a Web server 201, based on an instruction from the diagnosis device 200. The Web application 203 receives an HTTP response from the Web server 201, and outputs the details of the HTTP response to the diagnosis device 200. There is also a case where the diagnosis device 200 receives the HTTP response from the Web server 201.

The diagnosis device 200 includes an input unit 301, a crawling implementation unit 302, an extraction unit 303, a comparison unit 304, a request generation unit 305, a request transmission/reception unit 306, a determination unit 307, an output unit 308, an account information database (called as account information DB hereinafter) 309, a transitional data database (called as transitional data DB hereinafter) 310, a fixed parameter database (called as fixed parameter DB hereinafter) 311 and a result data database (called as result data DB hereinafter) 312.

Programs and data for realizing each function of the input unit 301, the crawling implementation unit 302, the extraction unit 303, the comparison unit 304, the request generation unit 305, the request transmission/reception unit 306, the determination unit 307 and the output unit 308 are stored in the memory 103. Also, each of the account information DB 309, the transitional data DB 310, the fixed parameter DB 311 and the result data DB 312 are disposed on the auxiliary storage device 105, and loaded onto the memory 103 as appropriate.

The input unit 301 is read out to the memory 103, and executed by the processor 102. The input unit 301 stores, in the auxiliary storage device 105, a value inputted via an input interface 106. The input unit 301 outputs the inputted value to the account information DB 309 and the transitional data DB 310 on the auxiliary storage device 105. To the input unit 301, a target URL which is a diagnostic target and account information (login information, authority information) are inputted.

The account information DB 309 holds two types of tables, that is, an account information table 410 and a login parameter table 420.

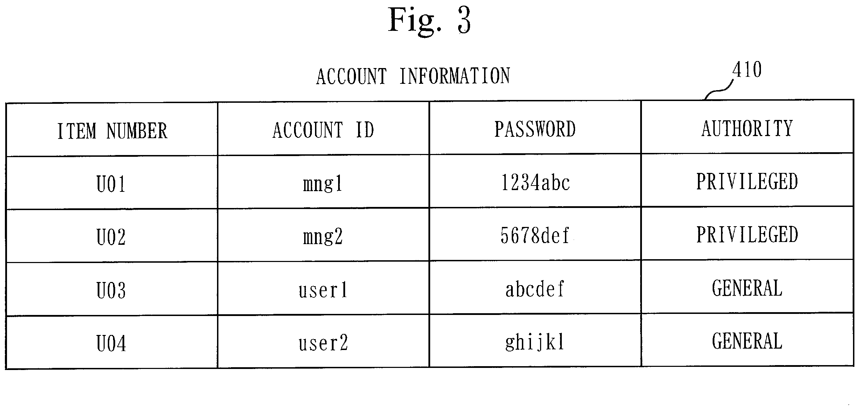

Fig.3 is a diagram illustrating an example of an account information table according to Embodiment 1.

The account information table 410 is a table holding fields for storing an account ID, a password, and authority allocated to the account (account authority) with which logging-in to the Web application 203 is possible. The account authority has two types, that is, privileged authority and general authority. The privileged authority is administrator authority that allows all operations. The general authority is authority whose operational range is limited only to a range with which general users can operate.

It is assumed that the number of accounts stored in the account information table 410 is equal to or more than two accounts for each authority to refer to a difference in the parameters caused by a difference in the accounts of the same authority.

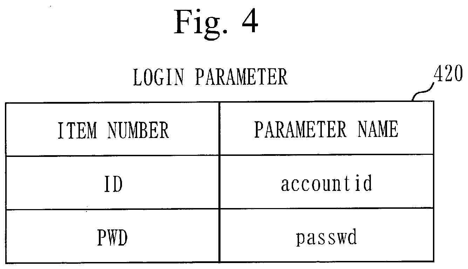

Fig.4 is a diagram illustrating an example of a login parameter table according to Embodiment 1.

The login parameter table 420 is a table which holds a field for storing a parameter name required for logging-in.

The transitional data DB 310 holds three types of tables, a target URL table 430, an HTTP request-response table 440 and a parameter table 450.

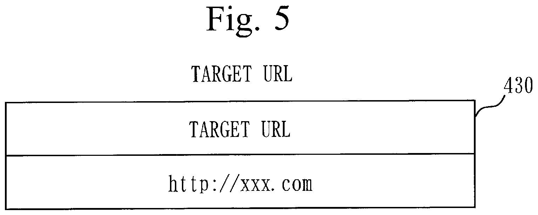

Fig.5 is a diagram illustrating an example of a target URL table according to Embodiment 1.

The target URL table 430 is a table holding a field for storing the target URL inputted by the input unit 301.

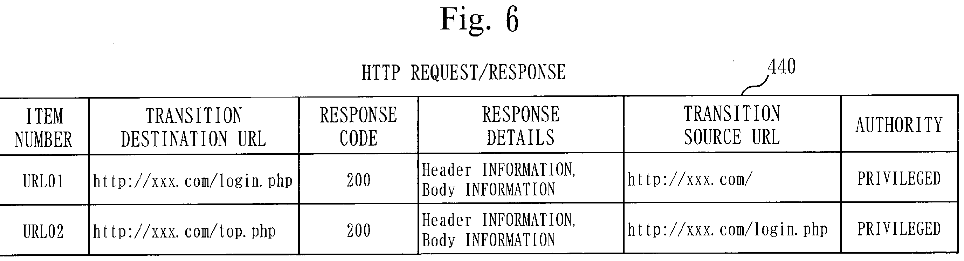

Fig.6 is a diagram illustrating an example of an HTTP request-response table according to Embodiment 1.

The HTTP request-response table 440 is a table which holds fields for storing a transition destination URL that is a transmission destination of the HTTP request, a response code for the HTTP request to the transition destination URL, response details for the HTTP request to the transition destination URL, a transition source URL that is a transmission source of the HTTP request to the transition destination URL, and authority of the account which transmits the HTTP request to the transition destination URL.

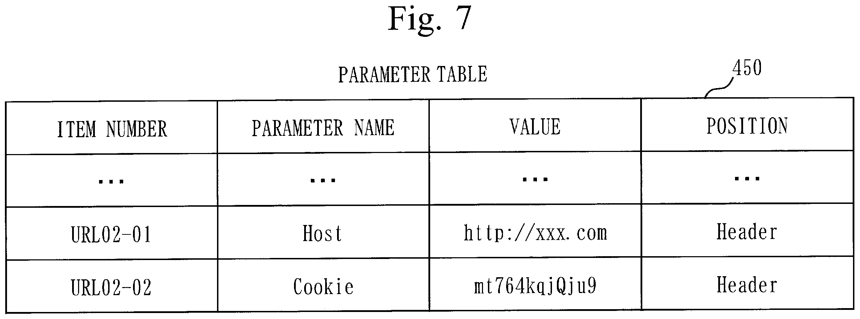

Fig.7 is a diagram illustrating an example of the parameter table 450 according to Embodiment 1.

The parameter table 450 is a table which holds fields for storing a parameter name of the HTTP request, a value of the parameter, a value indicating a position on which the parameter is written (a query part, a header part or a body part of the URL), for each transition destination URL. The value indicating the position on which the parameter is written is a name section of a query character string in the URL of the HTTP request, a header name of the HTTP header part, and a changeable value name of the HTTP body part. Also, the value of the parameter is a value section given to the parameter.

Return to the explanation of the functional configuration of the diagnosis device 200 in Fig.2.

The crawling implementation unit 302 is read out to the memory 103, and executed by the processor 102. The crawling implementation unit 302 reads out the account information DB 309 and the transitional data DB 310 from the auxiliary storage device 105. The crawling implementation unit 302 logs in the target URL stored in the transitional data DB 310 with each account stored in the account information DB 309, and performs crawling on the Web page that can be transitioned by the logged-in account. According to an instruction of the crawling implementation unit 302, the Web application 203 generates a HTTP request, and transmits the HTTP request via the Internet 202 to the Web server 201. After the HTTP response is received from the Web application 203, the HTTP request and the corresponding response are outputted to the crawling implementation unit 302. The crawling implementation unit 302 stores the HTTP request which is generated at the time of crawling and the corresponding HTTP response in the transitional data DB 310 on the auxiliary storage device 105.

Crawling is a technology in which a program called a crawler traces all hyperlinks of the given URL, and gathers page information of the transition destination so as to perform indexing. Also, by using a local proxy at the time of execution of crawling, it is possible to acquire all information of the HTTP request and the HTTP response arisen from the local proxy.

The extraction unit 303 is read out to the memory 103, and executed by the processor 102. The extraction unit 303 reads out the transitional data DB 310 from the auxiliary storage device 105. Regarding the records with the same transition destination URL and the same account authority among the records stored in the transitional data DB 310, the extraction unit 303 outputs a difference in the parameters of the HTTP request to the fixed parameter DB 311 on the auxiliary storage device 105.

The fixed parameter DB 311 holds a fixed parameter table 460.

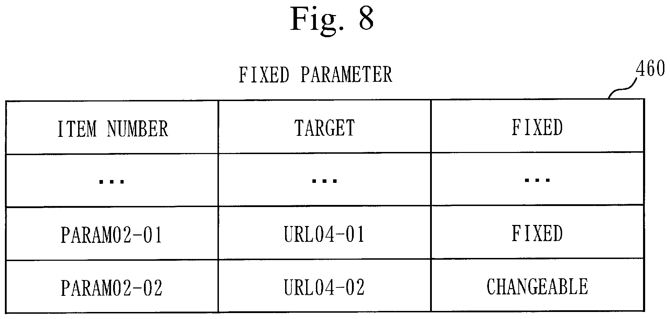

Fig.8 is a diagram illustrating an example of the fixed parameter table 460 according to Embodiment 1. The fixed parameter table 460 is a table holding a field for storing the parameter name of the HTTP request, and a field indicating that the parameter is fixed or changeable, for each transition destination URL.

The comparison unit 304 is read out to the memory 103, and executed by the processor 102. The comparison unit 304 reads out the transitional data DB 310 from the auxiliary storage device 105. The comparison unit 304 compares the parameters with each other, regarding the records having the same transition destination URL stored in the transitional data DB 310, and outputs the transition destination URL concerning which a difference exists, as a diagnostic target URL, to the result data DB 312.

The request generation unit 305 is read out to the memory 103, and executed by the processor 102. The request generation unit 305 reads out the result data DB 312 and the transitional data DB 310 from the auxiliary storage device 105. The request transmission/reception unit 306 is read out to the memory 103, and executed by the processor 102.

The request generation unit 305 instructs the request transmission/reception unit 306 to generate an HTTP request corresponding to the diagnostic target URL. The request transmission/reception unit 306 instructs the Web application 203 to generate an HTTP request corresponding to the diagnosis target URL. The request transmission/reception unit 306 outputs the HTTP request generated by the Web application 203 to the request generation unit 305. In an attempt to determine whether or not the same operation to the diagnostic target URL is possible by the general authority and by the privileged authority, the request generation unit 305 rewrites the HTTP request generated by the Web application 203 to that for a test-purpose, and outputs the rewritten HTTP request to the request transmission/reception unit 306. The request transmission/reception unit 306 transmits via the Internet 202 to the Web server 201, the HTTP request inputted from the request transmission/reception unit 306. The request transmission/reception unit 306 receives the HTTP response corresponding to the HTTP request from the Web server 201 via the Internet 202, and outputs the HTTP response to the determination unit 307.

The determination unit 307 is read out to the memory 103, and executed by the processor 102. The determination unit 307 reads out the HTTP response received by the request transmission/reception unit 306 and the transitional data DB 310 from the auxiliary storage device 105. The determination unit 307 determines presence/absence of vulnerability based on the HTTP response and the HTTP response corresponding to the HTTP request of the privileged authority stored in the transitional data DB 310, and outputs a determination result to the result data DB 312.

The output unit 308 is read out to the memory 103, and executed by the processor 102. The output unit 308 reads out the result data DB 312 stored in the auxiliary storage device 105 from the auxiliary storage device 105. The output unit 308 outputs the determination result read out from the result data DB 312 to the output interface 106.

The result data DB 312 holds two types of tables, that is, a diagnosis result table 470 and a result detail table 480.

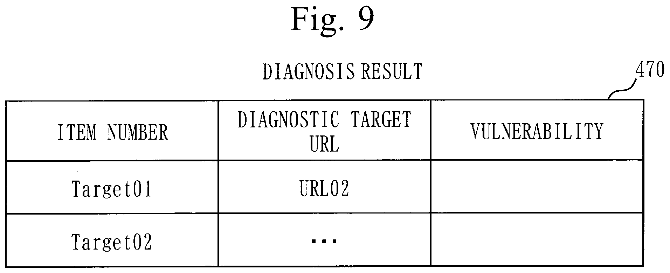

Fig.9 is a diagram illustrating an example of the diagnosis result table 470 according to Embodiment 1.

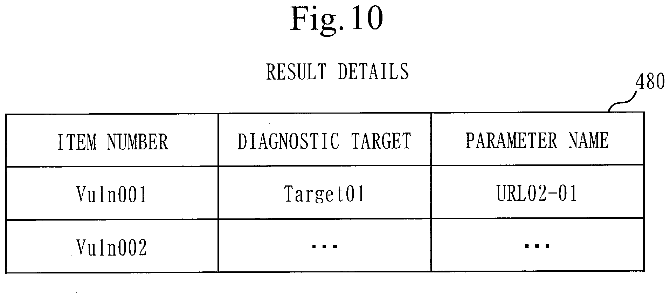

Fig.10 is a diagram illustrating an example of the result detail table 480 according to Embodiment 1.

The diagnosis result table 470 is a table holding fields for storing the diagnostic target URL and the result of the determination unit 307. The result detail table 480 is a table holding fields for storing the diagnostic target URL which is determined as vulnerable and the parameter name used.

Next, operation will be explained.

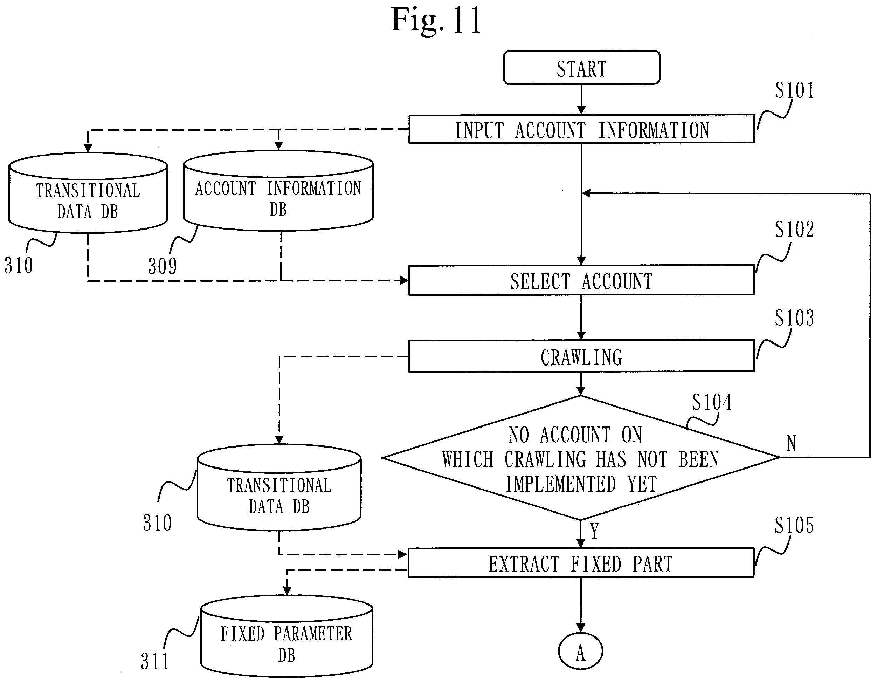

Fig.1 1 is a flowchart illustrating a flow of processes of the input unit 301, the crawling implementation unit 302 and the extraction unit 303 according to Embodiment 1. In the flowchart of Fig.11, solid lines indicate a course of the flow, and broken lines indicate writing-in and calling-out of data for each DB.

Fig.12 is a diagram illustrating an example of an HTTP request-response table 441 according to Embodiment 1.

Fig.13 is a diagram illustrating an example of a parameter table 451 according to Embodiment 1.

After a process of step S104 ends, the HTTP request-response table 441 of Fig.12 and the parameter table 451 of Fig.13 are acquired.

After the account information and the target URL are inputted via the input interface 106, the input unit 301 starts a process.

In step S101 of Fig.11, the input unit 301 stores the inputted account information in the account information table 410 and a login parameter 420 of the account information DB 309. The account information includes login information such as an account ID and a password required at the time of logging in the Web application 203, the account authority of the account and the parameter name of the parameter required for logging in.

The input unit 301 stores the account ID, the password and the account authority in items of account ID, password and authority of the account information table 410. In Fig.3, for example, as an item number U01, account ID "mng1", password "1234abc" and authority "privileged authority" are stored.

The input unit 301 stores the parameter name in the login parameter table 420. In Fig.4, the parameter "accountid" as item number ID, and the parameter "passwd" as item number PWD are stored.

Also, the input unit 301 stores the inputted target URL in the target URL table 430 of the transitional data DB 310. In Fig.5, in the target URL table 430, the target URL "http://xxx.com" is stored. The process proceeds to step S102.

In step S102, the crawling implementation unit 302 selects one record of the account on which crawling has not been implemented from the account information table 410 stored in the account information DB 309, and reads out the account ID and the password. The process proceeds to step S103.

In step S103, the crawling implementation unit 302 reads out the target URL "http://xxx.com" from the target URL table 430 of the transitional data DB 310. The crawling implementation unit 302 logs in the Web application 203 with the account ID and the password of the selected account, and executes crawling on the target URL.

A process will be explained using a case where the crawling implementation unit 302 logs in the Web application 203 with the account of item number U01 of the account information table 410 as an example. The crawling implementation unit 302 transmits the HTTP request to the target URL "http://xxx.com", and additionally transmits the HTTP request to "http://xxx.com/login.php" which is a link on "http://xxx.com". When the HTTP response to the HTTP request to "http://xxx.com/login.php" is received, the crawling implementation unit 302 stores the details of the HTTP response in item number URL01 of the HTTP request-response table 441 of the transitional data DB 310. The crawling implementation unit 302 stores "http://xxx.com/login.php" in the transition destination URL, "200" in the response code, Header information and Body information of the response in the response details, "http://xxx.com" in the transition source URL, and "privileged authority" in the authority. In the authority, a category of authority of the account which logs in is stored. Also, if the HTTP request transmitted to the transition destination URL "http://xxx.com/login.php" includes a parameter, the crawling implementation unit 302 stores it in the parameter table 451 of the transitional data DB 310. Although it is not illustrated in the parameter table 451 of Fig.13, it is assumed that the parameter is stored.

Next, the crawling implementation unit 302 transmits the HTTP request to "http://xxx.com/top.php" which is a link on the "http://xxx.com/login.php". When the HTTP response is received, the crawling implementation unit 302 stores the details of the HTTP response in item number URL02 of the HTTP request-response table 441. The crawling implementation unit 302 stores "http://xxx.com/top.php" in the transition destination URL, "200" in the response code, Header information and Body information of the response in the response details, "http://xxx.com/login.php" in the transition source URL, and "privileged authority" in the authority. The HTTP request transmitted to the transition destination URL "http://xxx.com/top.php" includes parameters "auth" and "userID". The crawling implementation unit 302 stores the parameter name, the value of the parameter, the value indicating the position on which the parameter is written (query part, header part or body part of the URL) in item numbers URL02-01 and URL02-02 of the parameter table 451. Note that item numbers URL02-01 and URL02-02 indicate that they are parameters of URL02. When storing a parameter in the parameter table 451, the crawling implementation unit 302 provides item numbers to clarify a relation between the parameter and an HTTP request which includes the parameter. In the present embodiment, item numbers are used for indicating the relation, but other methods may be used.

The crawling implementation unit 302 traces the target URL "http://xxx.com" and all links below it, and as described above, gathers page information of the transition destination and stores the gathered information in the HTTP request-response table 441 and the parameter table 451. After gathering the page information until there is no link destination which has not transitioned even on the transition destination page, the crawling implementation unit 302 ends crawling, and logs out. The process proceeds to step S104.

In step S104, the crawling implementation unit 302 determines if there is no account on which the crawling has not been implemented yet. The crawling implementation unit 302 perceives if the crawling has been implemented on each account of the account information table 410. If there is an account on which the crawling has not been implemented, the process proceeds to step S102. Then, the crawling implementation unit 302 selects the account on which the crawling has not been implemented, and implements the crawling.

The crawling implementation unit 302 repeats the flow of S102-S104 until there is no account on which the crawling has not been implemented.

In Fig.12, it is assumed that records of item numbers URL01-URL02 are stored with crawling of account ID "mng1", and records of item numbers URL03-URL04 are stored with crawling of account ID "mng2". It is assumed that records of item numbers URL05-URL06 are stored with clawing of account ID "userl", and records of item numbers URL07-URL08 are stored with crawling of account ID "user2". The records with the same transition destination URL and the same authority are information each of which is acquired by crawling implemented with the same authority and a different account.

In Fig.13, it is assumed that records of item numbers URL02-01 to URL02-02 are stored with crawling of account ID "mng1", and records of item numbers URL04-01 to URL04-02 are stored with crawling of account ID "mng2". It is assumed that records of item numbers URL06-01 to URL06-02 are stored with crawling of account ID "user1", and records of item numbers URL08-01 to URL08-02 are stored with crawling of account ID "user2".

Return to the explanation of the flowchart in Fig.11.

In step S104, if there is no account on which the crawling has not been implemented yet, the process proceeds to step S105.

In step 105, the extraction unit 303 performs, regarding the records with the same transition destination and the same authority of the privileged authority, a process of extracting a difference in parameters of the HTTP request.

The extraction unit 303 selects the records with the privileged authority and the same transition destination URL, from the HTTP request-response table 441. A case in which item number URL02 and item number URL04 are selected will be explained as an example. The parameters related to item numbers URL02 and URL04 are stored in URL02-01 to URL02-02 and URL04-01 to URL04-02 of the parameter table 451. The extraction unit 303 extracts a difference among these parameters.

As the values of URL02-01 and URL04-01 are the same, the extraction unit 303 stores "URL04-01" in the target and "fixed" in the fixed of item number PARAM02-01 of the fixed parameter table 460. As the values of URL02-02 and URL04-02 are different, the extraction unit 303 stores "URL04-02" in the target and "changeable" in the fixed of item number PARAM02-02 of the fixed parameter table 460. The process ends.

The parameter of the HTTP request are classified into three categories, that is, a value of the parameter such as a session ID and time which changes at each logging-in, a value of the parameter such as a destination URL and a content-type and so forth of header information which is fixed and unchanged at each logging-in, a value of the parameter such as a user ID which is unchanged at each logging-in but changes depending on an account. In the present embodiment, the extraction unit 303 can extract, from the parameter of the HTTP request, the fixed parameter which is unchanged at each logging-in.

Fig.14 is a flowchart illustrating a flow of processes of the comparison unit 304, the request generation unit 305, the request transmission/reception unit 306, the determination unit 307 and the output unit 308 according to Embodiment 1. Solid lines indicate a course of the flow, and broken lines indicate data writing-in and calling-out of data for each DB. In an attempt to determine whether or not the same operation to the diagnostic target URL is possible by the general authority and by the privileged authority, logging-in is performed by the general authority, and the HTTP request is transmitted to the diagnostic target URL.

In step S201, the comparison unit 304 selects a record from the HTTP request-response table 441 of the transitional data DB 310, and compares the record selected with another record. Details of step S201 will be described, using Fig.15.

Fig.15 is a flowchart illustrating details of a process of the comparison unit 304 in step S201 of Fig.14 according to Embodiment 1.

In step S301, the comparison unit 304 selects one record from the HTTP request-response table 441, and determines if there exists another record whose transition destination URL is the same. If there is no record whose transition destination URL is the same, the process proceeds to step S302. If there exists another record whose transition destination URL is the same, the process proceeds to step S304.

In step S302, the comparison unit 304 determines if the authority of the selected record is the privileged authority. If the authority of the selected record is the privileged authority, the process proceeds to step S303. If the authority of the selected record is not the privileged authority, the comparison unit 304 excludes the transition destination URL of the selected record from the diagnostic target, and the process ends.

In step S303, the comparison unit 304 stores the transition destination URL of the selected record in the diagnosis result table 470 of the result data DB 312 of Fig.9, and the process ends.

In step S304, the comparison unit 304 refers to the parameter table 451, and determines, regarding the record with the same transition destination URL, if the parameter name exists only in the record of the privileged authority. If the parameter name exists only in the record of the privileged authority, the process proceeds to step S305. If the parameter exists not only in the record of the privileged authority, the process proceeds to step S306.

In step S305, the comparison unit 304 stores the transition destination URL and the parameter name of the selected record in the diagnosis result table 470 of the result data DB 312, and the process ends.

In step S306, the comparison unit 304 refers to the parameter table 451, and determines, regarding the record with the same transition destination URL, if the same parameter name exists with the privileged authority and the general authority. If the same parameter name exists with the privileged authority and the general authority, the process proceeds to step S307. If the same parameter name does not exist with the privileged authority and the general authority, the comparison unit 304 excludes the transition destination URL of the selected record from the diagnostic target, and the process ends.

In step S307, the comparison unit 304 refers to the parameter table 451, and determines if the same parameter name exists with the privileged authority and the general authority, and the value is the same. If the value is not the same, the process proceeds to step S308. If the value is the same, the comparison unit 304 excludes the transition destination URL of the selected record from the diagnostic target, and the process ends.

In step S308, the comparison unit 304 refers to the fixed parameter table 460, and determines if the parameter is fixed. If the parameter is fixed, the process proceeds to step S305. If the parameter is not fixed, the comparison unit 304 excludes the transition destination URL of the selected record from the diagnostic tatget, and the process ends.

Return to the explanation of the flowchart of Fig.14. In step S202, the request generation unit 305 logs in the Web application 203 with the account of the general authority, using information stored in the account information DB 309. It is assumed that logging-in is performed with the account of item number U03 "user1". The process proceeds to step S203.

In step S203, the request generation unit 305 selects the diagnostic target URL from the diagnosis result table 470, and reads out, from the HTTP request-response table 441, the record in which the transition destination URL corresponding to the diagnostic target URL is stored. If an access right of the read-out record is about the privileged authority only, it means that the transition destination URL exists only with the privileged authority. The process proceeds to step S204. On the other hand, if the access right of the read-out record is about both of the record of the privileged authority and the record of the general authority, it means that the diagnostic target URL exists also with the general authority. The process proceeds to step S205.

In step S204, the request generation unit 305 outputs the diagnostic target URL to the Web application 203 via the request transmission/reception unit 306. The request generation unit 305 receives the HTTP request to the diagnostic target URL of the general authority from the Web application 203 via the request transmission/reception unit 306. The request generation unit 305 generates an HTTP request, based on a record read out from the HTTP request-response table 441. The read-out record is a record of the privileged authority. The request generation unit 305 reads out the parameter to be set to the HTTP request from the record of the parameter table 451 associated with the record read out from the HTTP request-response table 441. The read-out parameter is a parameter to be set to the HTTP request in a case of the privileged authority. The request generation unit 305 refers to the fixed parameter table 460 of the fixed parameter DB 311, and when the read-out parameter is fixed, the request generation unit 305 does not change the value of the parameter of the HTTP request. When the read-out parameter is changeable, the request generation unit 305 changes the value of the parameter of the HTTP request to the value of the parameter of the HTTP request of the general authority received from the Web application 203. Also, the request generation unit 305 stores, in the result detail table 480 of the result data DB 312, the diagnostic target URL and the parameter name whose value is changed. The request generation unit 305 outputs the HTTP request generated in this way to the request transmission/reception unit 306. The request transmission/reception unit 306 transmits the HTTP request inputted from the request generation unit 305 to the Web server 201, and when the HTTP response is received from the Web server 201, the request transmission/reception unit 306 outputs it to the determination unit 307. The process proceeds to step S206.

In step S205, the request generation unit 305 outputs the diagnostic target URL to the Web application 203 via the request transmission/reception unit 306, and receives the HTTP request to the diagnostic target URL of the account of the general authority via the request transmission/reception unit 306 from the Web application 203. In the case of the privileged authority from the record of the parameter table 451 associated with the record read out from the HTTP request-response table 441 in step S203, the request generation unit 305 reads out the parameter set to the HTTP request. The request generation unit 305 refers to the fixed parameter table 460 of the fixed parameter DB 311, and when there is a record corresponding to the parameter included in the HTTP request of the general authority, and when it is fixed, the request generation unit 305 changes the value of the corresponding parameter of the HTTP request to the value of the parameter of the privileged authority. Also, the request generation unit 305 stores, in the result detail table 480 of the result data DB 312, the diagnostic target URL and the name of the parameter whose value is changed. When there is a record corresponding to the parameter included in the HTTP request of the general authority, and when it is changeable, the request generation unit 305 does not change the value of the corresponding parameter of the HTTP request. The fixed parameter is, for example, a parameter for authority identification. The changeable parameter is, for example, a user ID and time. Also, the request generation unit 305 adds to the HTTP request, the parameter not included in the HTTP request of the general authority, among the read-out parameters of the privileged authority. The request generation unit 305 outputs the HTTP request generated in this way to the request transmission/reception unit 306. The request transmission/reception unit 306 transmits the HTTP request inputted from the request generation unit 305 to the Web server 201. When the request transmission/reception unit 306 receives the HTTP response from the Web server 201, the request transmission/reception unit 306 outputs the HTTP response to the determination unit 307. The process proceeds to step S206.

In step S206, the determination unit 307 compares a response code of the inputted HTTP response with a response code of a normal response stored in the HTTP request-response table 441. The determination unit 307 determines vulnerability by comparing the values of the response codes with each other. When the response codes are the same, operation of the privileged authority can be performed by the general authority, hence the determination unit 307 determines as vulnerable. When the response codes are different, the determination unit 307 determines as not-vulnerable. The determination unit 307 stores, in the vulnerability of the record corresponding to the diagnostic target URL of the diagnosis result table 470, presence/absence of vulnerability which has been determined. The process proceeds to step S207.

In step S207, the determination unit 307 determines if a determination process of vulnerability has been completed on the all records of the diagnosis result table 470. The determination unit 307 determines as completion if the items of vulnerability of all records of the diagnosis result table 470 are set. If it is completed, the process proceeds to step S208. When it is not completed, the process returns to step S202. Until the items of vulnerability of all records of the diagnosis result table 470 are set, the processes of steps S202-S207 are repeated.

In step S208, the output unit 308 outputs data of the result data DB 312 to an output interface 104, and the process ends.

Note that, in the present embodiment, it is determined as vulnerable when the response codes of the received HTTP response and the normal HTTP response stored in the HTTP request-response table 441 are the same, but it is also acceptable to determine vulnerability by using the value included in Header information or Body information of the HTTP response.

Accordingly, the present embodiment includes:
an extraction unit 303 to extract, from among parameters included in an HTTP request transmitted to a transition destination URL by a first account of privileged authority, a fixed parameter which has a same value as a parameter included in an HTTP request transmitted to the transition destination URL by a second account of the privileged authority;
a request generation unit 305, when the fixed parameter extracted by the extraction unit is included in a parameter in an HTTP request to the transition destination URL by an account of general authority, and when a value differs from a value of an account of the privileged authority, to output the HTTP request in which the value of the account of the privileged authority is set to the fixed parameter;
a request transmission/reception unit 306 to transmit the HTTP request to the transition destination URL by the account of the general authority, and receives an HTTP response; and
a determination unit 307 to determine vulnerability of the transition destination URL, based on the HTTP response.

Therefore, it is possible to diagnose if there exists incompletion of the authority management without perceiving the transition destination URL of the Web application in advance.

Incompletion of the authority management is diagnosed by checking if it is possible to make a transition to a page which does not appear on the screen of the general authority, or if it is possible to execute operation which is not executable. As the diagnosis device 200 diagnoses incompletion of the authority management, personnel expenses can be reduced as well.

When the fixed parameter extracted by the extraction unit 303 is not included in the parameter in the HTTP request to the transition destination URL by the account of the general authority, the request generation unit 305 adds to the HTTP request, the fixed parameter to which the value of the account of the privileged authority is set, and outputs the HTTP request to which the fixed parameter is added. Thereby, it is possible to diagnose if there is incompletion of the authority management, regarding the parameter not included in the HTTP request of the general authority.

Also, the extraction unit 303 extracts, from among the parameters included in the HTTP request transmitted to the transition destination URL by the first account, a changeable parameter which has a different value from the parameter included in the HTTP request transmitted to the transition destination URL by the second account. When transition by the general authority account to the transition destination URL does not occur, the request generation unit 305 sets the value of the parameter in the HTTP request to the transition destination URL by the general authority account to the value of the changeable parameter extracted by the extraction unit 303 in the HTTP request to the transition destination URL by the privileged authority account, and outputs the HTTP request to which the value is set. Thereby, it is possible to diagnose if there is incompletion of the authority management, regarding the transition destination URL to which transition is not made by the account of the general authority.

### Embodiment 2

In above Embodiment 1, the extraction unit 303 extracts a fixed parameter which is not changed every time of logging in, but in the present embodiment, an embodiment is described in which a parameter whose value is changeable and a parameter whose value is not changeable every time of logging-in are extracted, with a same combination of a transition destination URL and a parameter.

Note that, in the present embodiment, all the configurations written in Embodiment 1 are included, and further, additional configurations will be described.

Fig.16 is a diagram illustrating an example of a HTTP request-response table 442 according to Embodiment 2.

Fig.17 is a diagram illustrating an example of a parameter table 452 according to Embodiment 2.

First, regarding the flowchart of Fig.11, operation different from Embodiment 1 will be described.

In step S103 of Fig.11, the crawling implementation unit 302 implements crawling on the selected account, and after logging out, logs in the Web application 203 by the same account, and implements crawling on the target URL for the second time. The crawling implementation unit 302 logs out after the second crawling ends.

In Fig.16, it is assumed that records of item numbers URL01 to URL04 are stored with a first crawling of account ID "mng1", and records of item numbers URL05-URL07 are stored with a first crawling of account ID "user1".

In Fig.17, it is assumed that records of item numbers URL03-01 to URL03-03 and URL04-01 to URL04-03 with a first crawling of account ID "mng1", and records of item numbers URL07-01 to URL07-03 are stored with a first crawling of account ID "user1".

In a second crawling, an HTTP request-response table 443 and a parameter table 453 are acquired, in which a value equal to the value of the HTTP request-response table 442 of Fig.16 and the value of the parameter table 452 of Fig.17 acquired with the first crawling. As the details are the same, illustration is omitted.

In step S105 of Fig.1 1, the extraction unit 303 refers to the HTTP request-response table 442 and the parameter table 452 acquired with the first crawling, and the HTTP request-response table 443 and the parameter table 453 acquired with the second crawling, and regarding each item number of the privileged authority of the HTTP request-response table 442, extracts a difference in the parameters with the first crawling and the second crawling.

Fig.18 is a diagram illustrating an example of a fixed parameter table 462 according to Embodiment 2. Since the same value is obtained with the first crawling and the second crawling, all parameters in a fixed parameter table 461 are fixed.

Next, the extraction unit 303 selects the record of which authority is the privileged authority, among the records in the HTTP request-response table 442. The extraction unit 303 extracts a difference in the parameters, regarding the record of which authority is the privileged authority and with the same transition destination URL as the selected record, from the HTTP request-response table 442. The extraction unit 303 stores, in the fixed parameter table 462, the extracted difference in the parameters.

Fig.19 is a diagram illustrating an example of the fixed parameter table 462 according to Embodiment 2. Comparing item number URL03 with URL04, as the values of URL and userID are equal, "fixed" is stored in a fixed field of PARAM03-01 and PARAM03-02 of the fixed parameter table 462. On the other hand, as the value of the page is different, "changeable" is stored in the fixed field of PARAM03-03 of the fixed parameter table 462.

Fig.20 is a diagram illustrating an example of an HTTP request-response table 444 according to Embodiment 2.

The extraction unit 303 determines, in the fixed parameter table 462, a parameter page in which "changeable" is stored in the fixed field as being the parameter necessary for displaying the page uniquely. The extraction unit 303 adds a field of a transition parameter to the HTTP request-response table 442, and generates a HTTP request-response table 444 with a value of the page set to it.

Next, regarding the flowchart of Fig.14, operation different from Embodiment 1 will be described.

In step S201, the comparison unit 304 selects a record from the HTTP request-response table 444 of the transitional data DB 310, and compares with other record. Details of the process of step S201 will be described, using Fig.21.

Fig.21 is a flowchart illustrating details of the process of the comparison unit 304 in step S201 of Fig.14 according to Embodiment 2.

Fig.22 is a diagram illustrating an example of a diagnosis result table 471 according to Embodiment 2.

Fig.23 is a diagram illustrating an example of a result detail table 481 according to embodiment2.

In step S401 of Fig.21, the comparison unit 304 selects one record from the HTTP request-response table 444, and determines if there exists other record having the same transition destination URL and the transition parameter. If there is no record having the same transition destination URL and the transition parameter, the process proceeds to step S402. If there is a record having the same transition destination URL and the transition parameter, the process proceeds to step S404.

In step S402, the comparison unit 304 determines if the authority of the selected record is the privileged authority. When the authority of the selected record is the privileged authority, the process proceeds to step S403. When the authority of the selected record is not the privileged authority, the comparison unit 304 excludes the transition destination URL of the selected record from the diagnostic target, and the process ends.

In step S403, the comparison unit 304 stores the transition destination URL and the transition parameter of the selected record in the diagnosis result table 471 of the result data DB 312, and the process ends.

In step S404, the comparison unit 304 refers to the parameter table 452, and determines, regarding the record having the same transition destination URL and the same transition parameter, if the parameter name exists only in the record of the privileged authority. If the parameter name exists in only the record of the privilege authority, the process proceeds to step S405. If the parameter name exists not only in the record of the privileged authority, the process proceeds to step S406.

In step S405, the comparison unit 304 stores the transition destination URL, the transition parameter and the parameter name in the result detail table 481 of the result data DB 312, and the process ends.

In step S406, the comparison unit 304 refers to the parameter table 452, and determines, regarding the record having the same transition destination URL and the transition parameter, if the same parameter name exists with the privilege authority and the general authority. If the same parameter name exists with the privilege authority and the general authority, the process proceeds to step S407. If the same parameter name does not exist with the privilege authority and the general authority, the comparison unit 304 excludes the transition destination URL and the transition parameter from the diagnostic target, and the process ends.

In step S407, the comparison unit 304 refers to a parameter table 444, and determines if the same parameter name exists with the privilege authority and the general authority, and the values are the same. If the values are not the same, the process proceeds to step S305. If the values are the same, the comparison unit 304 excludes the transition destination URL and the transition parameter from the diagnostic target, and the process ends.

Note that, in the present embodiment, the crawling implementation unit 302 stores information acquired from the first and the second crawling in the HTTP request-response table 442 and the parameter table 452 without distinguishing them, but it is also allowable to store information acquired from the first and the second crawling distinguishably. Adding a table or adding a column of the table is also allowed.

As described above, in the present embodiment, regarding the fixed parameter which has the same value as the parameter included in the HTTP request transmitted to the transition destination URL by the second account, among the parameters included in the HTTP request transmitted to the transition destination URL by the first account, when values of the fixed parameter included in HTTP requests transmitted from the first account to the transition destination URL for a plurality of times are different, the extraction unit 303 extracts the fixed parameter as a transitional parameter uniquely indicating a page in combination with the transition destination URL. Thereby, incompletion of the authority management can be diagnosed even when a page is uniquely indicated by a combination of the URL and the transitional parameter.

### Embodiment 3

In above Embodiment 1, an embodiment is illustrated in which whether the parameter of an HTTP request extracted by the extraction unit 303 is fixed or changeable is stored in the fixed parameter table 460 of the fixed parameter DB 311, but in the present embodiment, an embodiment in which it is stored by adding a field to an HTTP request-response table of a transitional data DB 310 is illustrated.

Fig.24 is an overall block diagram including an example of a functional configuration of a diagnosis device 210 according to Embodiment 3. The difference from the diagnosis device 200 of Embodiment 1 is that an exclusive data DB is deleted.

Fig.25 is a flowchart illustrating a flow of processes of the input unit 301, the crawling implementation unit 302 and the extraction unit 303 according to Embodiment 3. The difference from the flowchart of Fig.1 1 of Embodiment 1 is that the process of outputting to the transitional data DB 310 is performed from step S105.

Fig.26 is a diagram illustrating an example of a parameter table 454 of the transitional data DB 310 according to Embodiment 3. The difference from the parameter table 451 of Embodiment 1 is that a fixed field is added.

In step 105 of Fig.25, operation different from Embodiment 1 will be described.

The extraction unit 303 extracts, regarding the record to the same transition destination with the same authority of privilege authority, a difference in the parameter of the HTTP request. As the values of URL02-01 and URL04-01 are the same, the extraction unit 303 stores "fixed" in the fixed of the item number URL02-01 and the item number URL04-01 of the fixed parameter table 460. Also, as the values of URL02-02 and URL04-02 are different, the extraction unit 303 stores "changeable" in the fixed of the item number PARAM02-02 and the item number URL04-02 of the fixed parameter table 460. The process ends.

Fig.27 is a flowchart illustrating a flow of the processes of the comparison unit 304, the request generation unit 305, the request transmission/reception unit 306, the determination unit 307 and the output unit 308 according to Embodiment 3. The difference from the flowchart of Fig.14 of Embodiment 1 is that in step S201, step S204 and step S205, reading out information indicating if the parameter is exclusive or not from the parameter table 454 of the transitional parameter DB is performed.

Note that, in the present embodiment, a function may be included, the function required for page transition to decide the specific parameter by implementing crawling twice on each account as illustrated in Embodiment 2.

Accordingly, in the present embodiment, as the transitional data DB 310 holds information of an exclusive parameter DB 311, it is possible to reduce the exclusive parameter having the same number of records as the records of a parameter table T203 of the transitional data DB 310, and reduce memory resource to be used in the exclusive parameter DB 311.

### Embodiment 4

In above Embodiment 1, the diagnosis device 200 extracts the diagnostic target URL, and determines vulnerability, but in the present embodiment, an embodiment in which a diagnostic target extraction device extracts the diagnostic target URL, and a diagnosis implementation device determines vulnerability of the extracted diagnostic target URL will be illustrated.

A different part from Embodiment 3 will be described.

Fig.28 is an overall block diagram including an example of a functional configuration of a diagnostic target extraction device 220 according to Embodiment 4.

The diagnostic target extraction device 220 includes an input unit 301, a crawling implementation unit 302, an extraction unit 303, a comparison unit 304, an account information DB 313, a transitional data DB 314 and an output unit 315. The account information DB 313 and the transitional data DB 314 holds the same function as the account information DB 309 and the transitional data DB 310 of Embodiment 3.

The comparison unit 304 is read out to the memory 103, and executed by the processor 102. The comparison unit 304 reads out the transitional data DB 310 from the auxiliary storage device 105. The comparison unit 304 compares the parameters, regarding the record of the same transition destination URL stored in the transitional data DB 310, and outputs the transition destination URL which has a different part as the diagnostic target URL, together with the parameter.

The output unit 315 is read out to the memory 103, and executed by the processor 102. The output unit 315 outputs the diagnostic target URL inputted from the comparison unit 304 to the output interface 106.

Fig.29 is an overall block diagram including an example of a functional configuration of a diagnosis implementation device 230 according to Embodiment 4.

The diagnosis implementation device 230 includes an input unit 316, a request generation unit 305, a request transmission/reception unit 306, a determination unit 307, an output unit 308, an account information DB 317, a transitional data DB 318 and a result data DB 319. The account information DB 317, the transitional data DB 318 and the result data DB 319 holds the same functions as the account information DB 309, the transitional data DB 310 and the result data DB 312 of Embodiment 3.

The input unit 316 is read out to the memory 103, and executed by the processor 102. The value inputted via the input interface 106 is stored in the auxiliary storage device 105. The input unit 316 outputs the inputted account information (login information and authority information) to the account information DB 317 on the auxiliary storage device 105. Also, the input unit 316 outputs the diagnostic target URL and the parameter to the transitional data DB 318.

Next, operation will be described.

Fig.30 is a flowchart illustrating a flow of processes of the input unit 301, the crawling implementation unit 302 and the extraction unit 303 of the diagnostic target extraction device 220 according to Embodiment 4. The processes of step S501 to S505 are the same as the processes of step S101 to S105 of Fig.25 of Embodiment 3.

In step S505, the extraction unit 303 outputs, regarding the record to the same transition destination and the same authority of privileged authority, the fixed parameter of the HTTP request to the comparison unit 304.

In step S506, when the parameter inputted from the extraction unit 303 exists in the privilege authority, and does not exist in the general authority or the value is different, the comparison unit 304 outputs the transition destination URL and the value of the parameter as diagnostic target data 320 via the output unit 315. Also, the output unit 315 outputs the account information stored in the account information DB 313. The process ends.

Fig.31 is a flowchart illustrating a flow of processes of the input unit 316, the request generation unit 305, the request transmission/reception unit 306, the determination unit 307 and the output unit 308 of the diagnosis implementation device 230 according to Embodiment 4.

In step S601, the account information and the diagnostic target data 320 are inputted in the input unit 316. The input unit 316 stores the inputted account information in the account information DB 317. Also, the input unit 316 stores the diagnostic target data 320 in the transitional data DB 318 and the result data DB.

Step S602 to S608 are the same as step S202 to S208 of Embodiment 3.

Note that, in the present embodiment, a function may be included, the function required for page transition to decide the specific parameter by implementing crawling twice on each account as illustrated in Embodiment 2.

Also, in the present embodiment, it is acceptable to gathering information of the diagnostic target outputted from the diagnostic target extraction device 220, and use existing methods for the security diagnosis. It is also acceptable to input, in the diagnosis implementation device 230, the information of the diagnostic target gathered from an Web application used in the existing security diagnosis.

Accordingly, in the present embodiment, the diagnostic target extraction device 220 and the diagnosis implementation device 230 are included, the diagnostic target extraction device 220 including the extraction unit 303 to extract, from among parameters included in an HTTP request transmitted to a transition destination URL by a first account of privileged authority, a fixed parameter which has a same value as a parameter included in an HTTP request transmitted to the transition destination URL by a second account of the privileged authority, and the diagnosis implementation device 230 including the request generation unit 305, when the fixed parameter extracted by the extraction unit is included in a parameter in an HTTP request to the transition destination URL by an account of general authority, and when a value differs from a value of an account of the privileged authority, to output the HTTP request in which the value of the account of the privileged authority is set to the fixed parameter; the request transmission/reception unit 306 to transmit the HTTP request to the transition destination URL by the account of the general authority, and receives an HTTP response; and the determination unit 307 to determine vulnerability of the transition destination URL, based on the HTTP response. Thereby, it is possible to diagnose if there is incompletion of the authority management without perceiving the transition destination URL of the Web application in advance.

### Reference Signs List

101: communication interface
102: processor
103: memory
104: output interface
105: auxiliary storage device
106: input interface
107: bus
200, 210: security diagnosis device
201: Web server
202: Internet
203: Web application
220: diagnostic target extraction device
230: diagnosis implementation device
301, 316: input unit
302: crawling implementation unit
303: extraction unit
304: comparison unit
305: request generation unit
306: request transmission/reception unit
307: determination unit
308, 315: output unit
309, 313, 317: account information DB
310, 314, 318: transitional data DB
311: fixed parameter DB
312, 319: result data DB
410: account information table
420: login parameter table
430: target URL table
440, 441, 442, 443, 444: HTTP request-response table
450, 451, 452, 453, 454: parameter table
460, 461, 462: fixed parameter table
470, 471: diagnosis result table
480, 481: result detail table.

## Claims

1. A security diagnosis device comprising:
an extraction unit to extract, from among parameters included in an HTTP request transmitted to a transition destination URL by a first account of privileged authority, a fixed parameter which has a same value as a parameter included in an HTTP request transmitted to the transition destination URL by a second account of the privileged authority;
a request generation unit, when the fixed parameter extracted by the extraction unit is included in a parameter in an HTTP request to the transition destination URL by an account of general authority, and when a value differs from a value of an account of the privileged authority, to output the HTTP request in which the value of the account of the privileged authority is set to the fixed parameter;
a request transmission/reception unit to transmit the HTTP request to the transition destination URL by the account of the general authority, and receives an HTTP response; and
a determination unit to determine vulnerability of the transition destination URL, based on the HTTP response.

2. The security diagnosis device according to claim 1,
wherein, when the fixed parameter extracted by the extraction unit is not included in the parameter in the HTTP request to the transition destination URL by the account of the general authority, the request generation unit adds to the HTTP request, the fixed parameter to which the value of the account of the privileged authority is set, and outputs the HTTP request to which the fixed parameter is added.

3. The security diagnosis device according to claim 1 or 2,
wherein the extraction unit extracts, from among the parameters included in the HTTP request transmitted to the transition destination URL by the first account, a changeable parameter which has a different value from the parameter included in the HTTP request transmitted to the transition destination URL by the second account; and
wherein, when transition by the general authority account to the transition destination URL does not occur, the request generation unit sets the value of the parameter in the HTTP request to the transition destination URL by the general authority account to the value of the changeable parameter extracted by the extraction unit in the HTTP request to the transition destination URL by the privileged authority account, and outputs the HTTP request to which the value is set.

4. The security diagnosis device according to any one of claims 1 to 3,
wherein, regarding the fixed parameter which has the same value as the parameter included in the HTTP request transmitted to the transition destination URL by the second account, among the parameters included in the HTTP request transmitted to the transition destination URL by the first account,
when values of the fixed parameter included in HTTP requests transmitted from the first account to the transition destination URL for a plurality of times are different,
the extraction unit extracts the fixed parameter as a transitional parameter uniquely indicating a page in combination with the transition destination URL.

5. The security diagnosis device according to any one of claims 1 to 4 comprising:
a crawling implementation unit to implement crawling on an inputted URL by a plurality of accounts of the privileged authority, and store in a transitional data database, the transition destination URL, a parameter included in an HTTP request transmitted to the transition destination URL, an HTTP response received from the transition destination URL and an authority of an account which has transmitted the HTTP request, associating with each other; and
a comparison unit to output the transition destination URL as a diagnostic target, based on the transition destination URLs of the plurality of privileged authority accounts stored in the transitional data database and the stored parameter.

6. A security diagnosis device comprising:
a security diagnostic target extraction device and a security diagnosis implementation device,
wherein the security diagnostic target extraction device includes an extraction unit to extract, from among parameters included in an HTTP request transmitted to a transition destination URL by a first account of privileged authority, a fixed parameter which has a same value as a parameter included in an HTTP request transmitted to the transition destination URL by a second account of the privileged authority, and
wherein the security diagnosis implementation device includes a request generation unit, when the fixed parameter extracted by the extraction unit is included in a parameter in an HTTP request to the transition destination URL by an account of general authority, and when a value differs from a value of an account of the privileged authority, to output the HTTP request in which the value of the account of the privileged authority is set to the fixed parameter;
a request transmission/reception unit to transmit the HTTP request to the transition destination URL by the account of the general authority, and receives an HTTP response; and
a determination unit to determine vulnerability of the transition destination URL, based on the HTTP response.

7. A security diagnosis method comprising:
a step for extracting, from among parameters included in an HTTP request transmitted to a transition destination URL by a first account of privileged authority, a fixed parameter which has a same value as a parameter included in an HTTP request transmitted to the transition destination URL by a second account of the privileged authority;
a step for outputting, when the fixed parameter extracted is included in a parameter in an HTTP request to the transition destination URL by an account of general authority, and when a value differs from a value of an account of the privileged authority, the HTTP request in which the value of the account of the privileged authority is set to the fixed parameter;
a step for transmitting the HTTP request to the transition destination URL, and receiving an HTTP response; and
a step for determining vulnerability of the transition destination URL, based on the HTTP response.
